# FASCICULE DE BREVET EUROPEEN

(11) **EP 3 261 905 B1**
(45) Date de publication et mention de la délivrance du brevet: **09.01.2019**
(21) Numéro de dépôt: 16714973.1
(22) Date de dépôt: 23.02.2016
(51) Int. Cl.: B62D 25/20, B60N 3/04, B60R 13/08

(54) **FAUX-PLANCHER DE VÉHICULE AUTOMOBILE**
ZUGANGSBODEN EINES KRAFTFAHRZEUGS
ACCESS FLOOR OF A MOTOR VEHICLE

(30) Priorité: 24.02.2015 FR 1551560
(43) Date de publication de la demande: 03.01.2018
(73) Titulaire: TREVES Products, Services & Innovation, 75008 Paris (FR)
(72) Inventeur: RIBES, Stéphane, 51140 Romain (FR); MARTINS, Carlos, 51150 Tours sur Marne (FR); PHILIPPE, Benoit, 17246 Santa Cristina D'Aro - Girona (ES)
(74) Mandataire: Sayettat, Julien Christian
(86) Numéro de dépôt international: PCT/FR2016/050410
(87) Numéro de publication internationale: WO 2016/135408

(56) Documents cités:
- DE-A1- 1 530 494
- FR-A1- 2 737 689
- FR-A1- 2 756 232

## Description

L'invention concerne un faux-plancher de véhicule automobile.
Il est connu de réaliser un faux-plancher de véhicule automobile, ledit faux-plancher comprenant une âme structurelle en matériau thermoplastique moulé par injection, ladite âme comprenant au moins une première partie, ladite première partie présentant une première face de réception des pieds des passagers, définissant une surface généralement plane et horizontale, et une première face d'envers, définissant une surface non plane.
La face de réception est usuellement formée par la face supérieure d'un plateau issu de moulage, la face d'envers étant usuellement formée de moyens de piètement sous forme de pieds issus de moulage.
Les moyens de piètement présentent des géométries et hauteurs variables pour tenir compte de la géométrie du plancher du véhicule et de la présence de divers organes - tels que des réseaux de câbles - disposés en dessous du faux-plancher.
L'âme ainsi formée est notamment à base de polypropylène chargé en fibres de renfort, notamment de verre, lui conférant la portance attendue pour recevoir les pieds des passagers.
Une telle âme présente généralement une épaisseur de paroi importante, par exemple de l'ordre de 2 à 3 mm, ceci du fait de la viscosité importante du matériau constitutif de l'âme qui empêche la réalisation de cloisons de plus fine épaisseur.
L'âme présente donc un poids important, ce qui est préjudiciable à l'allègement recherché pour les véhicules automobiles. Le document Fr 2737689 A1 montre un faux-plancher de véhicule automobile, ledit faux-plancher comprenant une âme structurelle en matériau thermoplastique moulé par injection, ladite âme comprenant au moins une première partie, ladite première partie présentant une première face de réception des pieds des passagers, définissant une surface généralement plane et horizontale, et une première face d'envers, définissant une surface non plane. L'invention a pour but de pallier cet inconvénient, et ceci sans dégrader la portance de l'âme.

A cet effet, l'invention propose un faux-plancher de véhicule automobile, ledit faux-plancher comprenant une âme structurelle en matériau thermoplastique moulé par injection, ladite âme comprenant au moins une première partie, ladite première partie présentant une première face de réception des pieds des passagers, définissant une surface généralement plane et horizontale, et une première face d'envers, définissant une surface non plane, ledit faux-plancher présentant en outre les caractéristiques suivantes :
- ladite première partie en vue de haut se présente généralement comme un réseau d'alvéoles contigües définissant un motif répétitif se déployant selon deux axes, lesdites alvéoles étant ouvertes sur lesdites faces de réception et d'envers,
- lesdites alvéoles sont délimitées par des cloisons s'étendant généralement verticalement, deux alvéoles contigües présentant au moins une portion de cloison commune,
- le matériau constitutif de ladite âme présente une fluidité MFR - mesurée selon la norme ISO 1133 - supérieure ou égale à 50, et notamment comprise entre 50 et 80,
- lesdites cloisons présentent généralement une épaisseur comprise entre 0,6 et 1,6 mm, et notamment comprise entre 0,7 et 1,4 mm, et notamment comprise entre 0,8 et 1,2 mm, ladite épaisseur variant de façon progressive de manière à présenter au moins une dépouille permettant le démoulage de ladite âme.

La non-planéité de la première face d'envers est dictée par la géométrie du plancher du véhicule et par la présence de divers organes - tels que des réseaux de câbles - disposés en dessous du faux-plancher.

L'obtention de cloisons de si fine épaisseur est rendue possible de par la fluidité élevée du matériau constitutif de l'âme.

Et le manque de rigidité intrinsèque de cloisons aussi fines est contrebalancé par leur densité surfacique pour conférer la portance attendue à l'âme.

Lorsqu'il est dit que la première partie en vue de haut se présente généralement comme un réseau d'alvéoles, cela n'exclut pas qu'elle puisse présenter localement une autre structure, par exemple en zone périphérique.

Dans cette description, les termes de positionnement dans l'espace (hauteur, bas, avant, vertical, horizontal, ...) sont pris en référence au faux-plancher monté dans le véhicule.

Avec l'agencement proposé, on réalise un allégement conséquent de l'âme par rapport à celles connues de l'art antérieur, ceci de par la réalisation de cloisons de très fine épaisseur, la structure particulière conférée à l'âme lui permettant de présenter la portance attendue.

D'autres particularités et avantages de l'invention apparaîtront dans la description qui suit, faite en référence aux figures jointes, dans lesquelles :
- la figure 1 est une représentation schématique en perspective d'une âme de faux-plancher selon une réalisation,
- les figures 2 sont des vue schématiques en coupe partielles de l'âme de la figure 1, perpendiculairement à une face de réception, selon un premier (2a) et un deuxième (2b) mode de réalisation des cloisons.

En référence aux figures, on décrit un faux-plancher 1 de véhicule automobile, ledit faux-plancher comprenant une âme 2 structurelle en matériau thermoplastique moulé par injection, ladite âme comprenant au moins une première partie 3, ladite première partie présentant une première face de réception 4 des pieds des passagers, définissant une surface généralement plane et horizontale, et une première face d'envers 5, définissant une surface non plane, ledit faux-plancher présentant en outre les caractéristiques suivantes :
- ladite première partie en vue de haut se présente généralement comme un réseau d'alvéoles 6 contigües définissant un motif répétitif se déployant selon deux axes 12a,12b, lesdites alvéoles étant ouvertes sur lesdites faces de réception et d'envers,
- lesdites alvéoles sont délimitées par des cloisons 7 s'étendant généralement verticalement, deux alvéoles 6 contigües présentant au moins une portion de cloison 7 commune,
- le matériau constitutif de ladite âme présente une fluidité MFR - mesurée selon la norme ISO 1133 - supérieure ou égale à 50, et notamment comprise entre 50 et 80,
- lesdites cloisons présentent généralement une épaisseur comprise entre 0,6 et 1,6 mm, et notamment comprise entre 0,7 et 1,4 mm, et notamment comprise entre 0,8 et 1,2 mm, ladite épaisseur variant de façon progressive de manière à présenter au moins une dépouille permettant le démoulage de ladite âme.

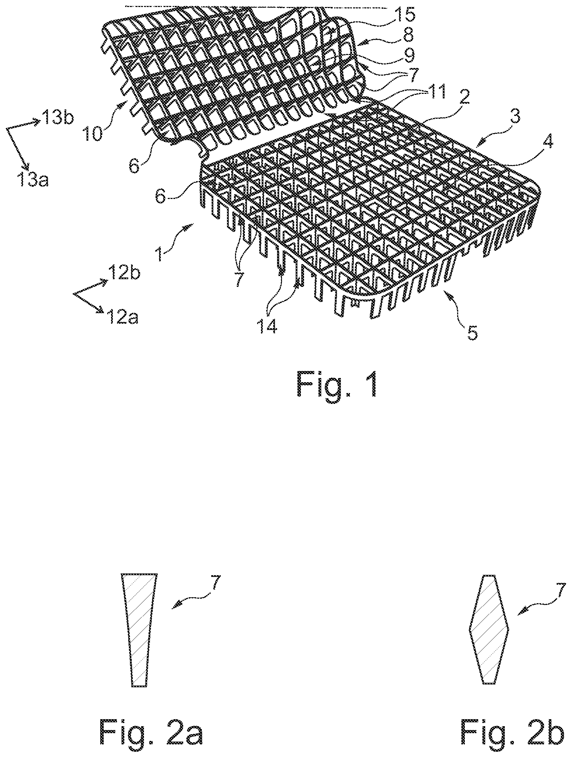

Selon le mode de réalisation de la figure 2a, les cloisons 7 sont pourvues d'une dépouille unique, liée au positionnement du plan de joint du moule en extrémité desdites cloisons, un tel mode étant notamment adapté lorsque l'âme présente une faible épaisseur, par exemple de l'ordre de 40 mm.

Selon le mode de réalisation de la figure 2b, les cloisons 7 sont pourvues d'une double dépouille, liée au positionnement du plan de joint du moule en partie médiane desdites cloisons, un tel mode étant notamment adapté lorsque l'âme présente une épaisseur plus importante, par exemple de l'ordre de 60 mm.

Selon la réalisation représentée, l'âme 2 comprend en outre une deuxième partie 8 disposée en avant de la première partie 3, ladite deuxième partie présentant une deuxième face de réception 9 des pieds des passagers, définissant une surface généralement plane et horizontale, et une deuxième face d'envers 10, définissant une surface non plane, ledit faux-plancher présentant en outre les caractéristiques suivantes :
- ladite deuxième partie en vue de haut se présente généralement comme un réseau d'alvéoles 6 contigües définissant un motif répétitif se déployant selon deux axes 13a,13b, lesdites alvéoles étant ouvertes sur lesdites faces de réception et d'envers,
- lesdites alvéoles sont délimitées par des cloisons 7 s'étendant généralement verticalement, deux alvéoles 6 contigües présentant au moins une portion de cloison 7 commune,
- lesdites cloisons présentent généralement une épaisseur comprise entre 0,6 et 1,6 mm, et notamment comprise entre 0,7 et 1,4 mm, et notamment comprise entre 0,8 et 1,2 mm, ladite épaisseur variant de façon progressive de manière à présenter au moins une dépouille permettant le démoulage de ladite âme.

Selon une réalisation, les alvéoles 6 de l'une et/ou l'autre des parties 3,8 sont exemptes de matériau de remplissage, de manière à créer une couche d'air subdivisée par les cloisons 7.

Selon une variante, les alvéoles 6 de l'une et/ou l'autre des parties 3,8 peuvent être totalement ou partiellement remplies avec un matériau poreux, par exemple sous forme de mousse, de façon à réaliser une absorption acoustique au sein dudit matériau.

Selon la réalisation représentée, la première partie 3 est reliée à la deuxième partie 8 par au moins un pont 11 de matière flexible - en l'occurrence une pluralité dans la réalisation représentée - formant charnière souple destinée notamment à faciliter le moulage et/ou le montage et/ou l'empilement du faux-plancher 1 en vue de son transport.

Selon une réalisation, les alvéoles 6 d'au moins une des parties 3,8 - et en particulier des deux parties 3,8 - se déploient selon les deux axes 12a, 12b, 13a, 13b selon un pas maximum de 50 mm, et notamment selon un pas maximum de 30 mm.

Le choix d'un pas aussi faible conduit à une densité surfacique d'alvéoles 6 élevée qui permet d'assurer la portance attendue pour l'âme 2, et ceci malgré la faible épaisseur des cloisons 7.

Selon la réalisation représentée, les deux axes 12a,12b,13a,13b dans lesquelles se déploient les alvéoles 6 d'au moins une des parties 3,8 - en l'occurrence des deux parties 3,8 dans la réalisation représentée - sont perpendiculaires.

Selon la réalisation représentée, le motif d'alvéole 6 d'au moins une des parties 3,8 - en l'occurrence les deux parties 3,8 dans la réalisation représentée - est un carré.

En variante non représentée, le motif peut être un hexagone ou tout autre motif géométrique susceptible d'être répété selon deux axes 12a,12b,13a,13b.

Selon la réalisation représentée, les cloisons 7 d'au moins une des parties 3,8 - en l'occurrence des deux parties 3,8 dans la réalisation représentée - se prolongent vers le bas par des pattes 14 de piètement issues de moulage, lesdites pattes présentant une épaisseur similaire à celle desdites cloisons, lesdites pattes présentant une hauteur variable.

La hauteur variable des pattes 14 est dictée par la géométrie du plancher du véhicule et par la présence de divers organes - tels que des réseaux de câbles - disposés en dessous du faux-plancher 1.

La présence d'un réseau serré de pattes 14 permet de satisfaire aux contraintes de portance attendues pour l'âme 2.

Selon la réalisation représentée, les deux parties 3,8 présentent généralement des alvéoles 6 similaires.

Selon une réalisation, le matériau constitutif de l'âme 2 est à base de polyoléfine, notamment de polypropylène et/ou de polyéthylène.

Selon une réalisation, le matériau constitutif de l'âme 2 est dépourvu de fibres de renfort, telles que des fibres de verre, ce qui permet d'obtenir la fluidité attendue pour ledit matériau.

Selon une réalisation, l'âme 2 présente hors tout - c'est à dire en tenant compte des pattes 14 le cas échéant - une hauteur - correspondant en l'occurrence à une épaisseur mesurée selon une direction perpendiculaire à la première 4 (et éventuellement deuxième 9) face de réception - comprise entre 30 et 70 mm, et notamment entre 40 et 60 mm.

Les parois 7, quant à elles, peuvent présenter notamment une hauteur comprise entre 7 et 25 mm, et plus particulièrement entre 10 et 20 mm, sachant que la portance de l'âme est d'autant meilleure que la hauteur de paroi 7 est importante.

Selon la réalisation représentée, la deuxième partie 8 comprend une zone d'absorption d'énergie 15 - destinée à amortir le choc des pieds des passagers en situation d'accident, l'absorption d'énergie se faisant par ruine de la structure de l'âme 2 -, ladite zone étant agencée pour présenter une résistance à l'enfoncement amoindrie face à un effort d'enfoncement appliqué perpendiculairement à la deuxième face de réception 9.

La zone d'absorption 15 présente par exemple, de façon non représentée, des amorces de rupture ou de pliage issus de moulage.

Un tel agencement permet notamment de s'affranchir de blocs de polystyrène ou polypropylène expansé utilisés usuellement pour réaliser l'absorption d'énergie.

Selon la réalisation représentée, le faux-plancher 1 comprend en outre au moins une couche de protection acoustique, non représentée, notamment sous forme de mousse élastiquement compressible ou de feutre, disposée en-dessous et/ou au-dessus de l'âme 2.

Selon une réalisation, le faux-plancher 1 comprend en outre une couche de revêtement, non représenté, disposée au-dessus de l'âme 2 de manière à recevoir les pieds des passagers.

## Revendications

1. Faux-plancher (1) de véhicule automobile, ledit faux-plancher comprenant une âme (2) structurelle en matériau thermoplastique moulé par injection, ladite âme comprenant au moins une première partie (3), ladite première partie présentant une première face de réception (4) des pieds des passagers, définissant une surface généralement plane et horizontale, et une première face d'envers (5), définissant une surface non plane, ledit faux-plancher étant **caractérisé en ce que** :
• ladite première partie en vue de haut se présente généralement comme un réseau d'alvéoles (6) contigües définissant un motif répétitif se déployant selon deux axes (12a,12b), lesdites alvéoles étant ouvertes sur lesdites faces de réception et d'envers,
• lesdites alvéoles sont délimitées par des cloisons (7) s'étendant généralement verticalement, deux alvéoles (6) contigües présentant au moins une portion de cloison (7) commune,
• le matériau constitutif de ladite âme présente une fluidité MFR - selon la norme ISO 1133 - supérieure ou égale à 50, et notamment comprise entre 50 et 80,
• lesdites cloisons présentent généralement une épaisseur comprise entre 0,6 et 1,6 mm, et notamment comprise entre 0,7 et 1,4 mm, et notamment comprise entre 0,8 et 1,2 mm, ladite épaisseur variant de façon progressive de manière à présenter au moins une dépouille permettant le démoulage de ladite âme.

2. Faux-plancher selon la revendication 1, **caractérisé en ce que** l'âme (2) comprend en outre une deuxième partie (8) disposée en avant de la première partie (3), ladite deuxième partie présentant une deuxième face de réception (9) des pieds des passagers, définissant une surface généralement plane et horizontale, et une deuxième face d'envers (10), définissant une surface non plane, ledit faux-plancher présentant en outre les caractéristiques suivantes :
• ladite deuxième partie en vue de haut se présente généralement comme un réseau d'alvéoles (6) contigües définissant un motif répétitif se déployant selon deux axes (13a,13b), lesdites alvéoles étant ouvertes sur lesdites faces de réception et d'envers,
• lesdites alvéoles sont délimitées par des cloisons (7) s'étendant généralement verticalement, deux alvéoles (6) contigües présentant au moins une portion de cloison (7) commune,
• lesdites cloisons présentent généralement une épaisseur comprise entre 0,6 et 1,6 mm, et notamment comprise entre 0,7 et 1,4 mm, et notamment comprise entre 0,8 et 1,2 mm, ladite épaisseur variant de façon progressive de manière à présenter au moins une dépouille permettant le démoulage de ladite âme.

3. Faux-plancher selon la revendication 2, **caractérisé en ce que** la première partie (3) est reliée à la deuxième partie (8) par au moins un pont (11) de matière flexible formant charnière souple destinée notamment à faciliter le moulage et/ou le montage et/ou l'empilement dudit faux-plancher.

4. Faux-plancher selon l'une quelconque des revendications 1 à 3, **caractérisé en ce que** les alvéoles (6) d'au moins une des parties (3,8) se déploient selon les deux axes (12a,12b,13a,13b) selon un pas maximum de 50 mm, et notamment selon un pas maximum de 30 mm.

5. Faux-plancher selon l'une quelconque des revendications 2 à 4, **caractérisé en ce que** les deux axes (12a,12b,13a,13b) dans lesquelles se déploient les alvéoles (6) d'au moins une des parties (3,8) sont perpendiculaires.

6. Faux-plancher selon l'une quelconque des revendications 1 à 5, **caractérisé en ce que** le motif d'alvéole (6) d'au moins une des parties (3,8) est un carré.

7. Faux-plancher selon l'une quelconque des revendications 1 à 6, **caractérisé en ce que** les cloisons (7) d'au moins une des parties (3,8) se prolongent vers le bas par des pattes (14) de piètement issues de moulage, lesdites pattes présentant une épaisseur similaire à celle desdites cloisons, lesdites pattes présentant une hauteur variable.

8. Faux-plancher selon l'une quelconque des revendications 1 à 7, **caractérisé en ce que** le matériau constitutif de l'âme (2) est dépourvu de fibres de renfort.

9. Faux-plancher selon l'une quelconque des revendications 2 à 8, **caractérisé en ce que** la deuxième partie (8) comprend une zone d'absorption d'énergie (15), ladite zone étant agencée pour présenter une résistance à l'enfoncement amoindrie face à un effort d'enfoncement appliqué perpendiculairement à la deuxième face de réception (9).

10. Faux-plancher selon l'une quelconque des revendications 1 à 9, **caractérisé en ce qu'**il comprend en outre au moins une couche de protection acoustique, notamment sous forme de mousse élastiquement compressible ou de feutre, disposée au-dessus et/ou en-dessous de l'âme (2).

## Patentansprüche

1. Doppelboden (1) für ein Kraftfahrzeug, wobei der Doppelboden einen spritzgegossenen Strukturkern (2) aus thermoplastischem Material umfasst, wobei der Kern mindestens einen ersten Teil (3) umfasst, wobei der erste Teil eine erste Seite zum Aufnehmen (4) der Füße der Insassen aufweist, die eine im Allgemeinen ebene und horizontale Fläche definiert, und eine erste Rückseite (5), die eine nicht ebene Fläche definiert, wobei der Doppelboden **dadurch gekennzeichnet ist, dass**:
- sich der erste Teil in Draufsicht im Allgemeinen wie ein Netz aus zusammenhängenden Kammern (6) darstellt, die ein sich wiederholendes Muster definieren, das sich gemäß zwei Achsen (12a, 12b) ausbreitet, wobei die Kammern an der Aufnahme- und Rückseite offen sind,
- die Kammern von Wänden (7) begrenzt werden, die sich im Allgemeinen vertikal erstrecken, wobei zwei zusammenhängende Kammern (6) mindestens einen gemeinsamen Wandabschnitt (7) aufweisen,
- das Material, aus dem der Kern besteht, eine MFR-Fluidität - gemäß der Norm ISO 1133 - von größer oder gleich 50, und insbesondere im Bereich zwischen 50 und 80 aufweist,
- die Wände im Allgemeinen eine Dicke im Bereich zwischen 0,6 und 1,6 mm, und insbesondere im Bereich zwischen 0,7 und 1,4 mm, und insbesondere im Bereich zwischen 0,8 und 1,2 mm aufweisen, wobei die Dicke zunehmend variiert, sodass sie mindestens eine Verjüngung aufweist, die das Ausformen des Kerns ermöglicht.

2. Doppelboden nach Anspruch 1, **dadurch gekennzeichnet, dass** der Kern (2) weiter einen zweiten Teil (8) umfasst, der vor dem ersten Teil (3) angeordnet ist, wobei der zweite Teil eine zweite Seite zum Aufnehmen (9) der Füße der Insassen aufweist, die eine im Allgemeinen ebene und horizontale Fläche definiert, und eine zweite Rückseite (10), die eine nicht ebene Fläche definiert, wobei der Doppelboden weiter die folgenden Merkmale aufweist:
- der zweite Teil stellt sich in Draufsicht im Allgemeinen wie ein Netz aus zusammenhängenden Kammern (6) dar, die ein sich wiederholendes Muster definieren, das sich gemäß zwei Achsen (13a, 13b) ausbreitet, wobei die Kammern an der Aufnahme- und Rückseite offen sind,
- die Kammern werden von Wänden (7) begrenzt, die sich im Allgemeinen vertikal erstrecken, wobei zwei zusammenhängende Kammern (6) mindestens einen gemeinsamen Wandabschnitt (7) aufweisen,
- die Wände weisen im Allgemeinen eine Dicke im Bereich zwischen 0,6 und 1,6 mm, und insbesondere im Bereich zwischen 0,7 und 1,4 mm, und insbesondere im Bereich zwischen 0,8 und 1,2 mm auf, wobei die Dicke zunehmend variiert, sodass sie mindestens eine Verjüngung aufweist, die das Ausformen des Kerns ermöglicht.

3. Doppelboden nach Anspruch 2, **dadurch gekennzeichnet, dass** der erste Teil (3) mit dem zweiten Teil (8) verbunden ist über mindestens eine Brücke (11) aus flexiblem Material, die ein biegsames Scharnier bildet, das insbesondere dazu bestimmt ist, das Formen und/oder die Montage und/oder das Stapeln des Doppelbodens zu erleichtern.

4. Doppelboden nach einem der Ansprüche 1 bis 3, **dadurch gekennzeichnet, dass** sich die Kammern (6) von mindestens einem der Teile (3, 8) gemäß den zwei Achsen (12a, 12b, 13a, 13b) gemäß einer maximalen Teilung von 50 mm, und insbesondere gemäß einer maximalen Teilung von 30 mm ausbreiten.

5. Doppelboden nach einem der Ansprüche 2 bis 4, **dadurch gekennzeichnet, dass** die zwei Achsen (12a, 12b, 13a, 13b), in denen sich die Kammern (6) von mindestens einem der Teile (3, 8) ausbreiten, senkrecht sind.

6. Doppelboden nach einem der Ansprüche 1 bis 5, **dadurch gekennzeichnet, dass** das Kammermuster (6) von mindestens einem der Teile (3, 8) ein Quadrat ist.

7. Doppelboden nach einem der Ansprüche 1 bis 6, **dadurch gekennzeichnet, dass** die Wände (7) von mindestens einem der Teile (3, 8) sich nach unten über Gestellfüße (14) verlängern, die aus dem Formen hervorgegangen sind, wobei die Füße eine ähnliche Dicke aufweisen wie diejenige der Wände, wobei die Füße eine variable Höhe aufweisen.

8. Doppelboden nach einem der Ansprüche 1 bis 7, **dadurch gekennzeichnet, dass** das Material, aus dem der Kern (2) besteht, frei von Verstärkungsfasern ist.

9. Doppelboden nach einem der Ansprüche 2 bis 8, **dadurch gekennzeichnet, dass** der zweite Teil (8) eine Energieabsorptionszone (15) umfasst, wobei die Zone so eingerichtet ist, dass sie einen geringeren Eindrückwiderstand gegenüber einer Eindrückkraft aufweist, die senkrecht auf die zweite Aufnahmeseite (9) aufgebracht wird.

10. Doppelboden nach einem der Ansprüche 1 bis 9, **dadurch gekennzeichnet, dass** er weiter mindestens eine Akustikschutzschicht, insbesondere in Form von elastisch komprimierbarem Schaum oder von Filz umfasst, die über und/oder unter dem Kern (2) angeordnet ist.

## Claims

1. Access floor (1) of a motor vehicle, said access floor comprising a structural core (2) made from injection-moulded thermoplastic material, said core comprising at least one first part (3), said first part having a first face (4) for receiving the feet of the passengers, defining a generally flat and horizontal surface, and a first rear face (5), defining a non-planar surface, said access floor further being **characterised in that**:
- said first part in plan view is generally in the form of a network of contiguous cells (6) defining a repetitive pattern extending along two axes (12a, 12b), said cells being open on said reception and rear faces,
- said cells are delimited by partitions (7) extending generally vertically, two contiguous cells (6) having at least one common portion of partition (7),
- the material constituting said core has an MFR fluidity
- in accordance with ISO 1133 - greater than or equal to 50, and in particular between 50 and 80,
said partitions generally have a thickness of between 0.6 and 1.6 mm, and particularly between 0.7 and 1.4 mm, and particularly between 0.8 and 1.2 mm, said thickness varying progressively so as to exhibit at least one undercut enabling said core to be removed from the mould.

2. Access floor according to claim 1, **characterised in that** the core (2) further comprises a second part (8) disposed in front of the first part (3), said second part having a second face (9) for receiving the feet of the passengers, defining a generally planar and horizontal surface, and a second rear face (10), defining a non-planar surface, said access floor further having the following features:
- said second part in plan view is generally in the form of a network of contiguous cells (6) defining a repetitive pattern extending along two axes (13a, 13b), said cells being open on said reception and rear faces,
- said cells are delimited by partitions (7) extending generally vertically, two contiguous cells (6) having at least one common portion of partition (7),
- said partitions generally have a thickness of between 0.6 and 1.6 mm, and particularly between 0.7 and 1.4 mm, and particularly between 0.8 and 1.2 mm, said thickness varying progressively so as to exhibit at least one undercut enabling said core to be removed from the mould.

3. Access floor according to claim 2, **characterised in that** the first part (3) is connected to the second part (8) by at least one bridge (11) of flexible material forming a flexible hinge intended in particular to facilitate moulding and/or assembly and/or stacking of said access floor.

4. Access floor according to any of claims 1 to 3, **characterised in that** the cells (6) of at least one of the parts (3, 8) extend along the two axes (12a, 12b, 13a, 13b) at a maximum pitch of 50 mm, and in particular at a maximum pitch of 30 mm.

5. Access floor according to any of claims 2 to 4, **characterised in that** the two axes (12a, 12b, 13a, 13b) in which the cells (6) of at least one of the parts (3, 8) extend are perpendicular.

6. Access floor according to any of claims 1 to 5, **characterised in that** the cell pattern (6) of at least one of the parts (3, 8) is a square.

7. Access floor according to any of claims 1 to 6, **characterised in that** the partitions (7) of at least one of the parts (3, 8) are extended downwards by base lugs (14) issuing from moulding, said lugs having a thickness similar to those of said partitions, said lugs having a variable height.

8. Access floor according to any of claims 1 to 7, **characterised in that** the material constituting the core (2) is devoid of reinforcement fibres.

9. Access floor according to any of claims 2 to 8, **characterised in that** the second part (8) comprises an energy absorption zone (15), said zone being arranged so as to have a lower resistance to pressing in faced with a pressing-in force applied perpendicular to the second reception face (9).

10. Access floor according to any of claims 1 to 9, **characterised in that** it further comprises at least one acoustic protection layer, in particular in the form of elastically compressible foam or of felt, disposed above and/or below the core (2).
